# EUROPEAN PATENT SPECIFICATION

(11) **EP 3 590 831 B1**
(45) Date of publication and mention of the grant of the patent: **05.05.2021**
(21) Application number: 18425042.1
(22) Date of filing: 05.06.2018
(51) Int. Cl.: B64C 27/12, F16H 57/04, F16N 29/00, F01M 1/10, F01M 1/12, F16N 7/40, F01D 17/08, F01D 21/14, F01D 25/18, F01M 1/22, F02C 7/06, F02C 7/36

(54) **SYSTEM AND METHOD FOR GEAR ASSEMBLY LUBRICANT SYSTEM FAILURE DETECTION**
SYSTEM UND VERFAHREN ZUR AUSFALLERKENNUNG EINES SCHMIERMITTELSYSTEMS FÜR EINE GETRIEBEANORDNUNG
SYSTÈME ET PROCÉDÉ DE DÉTECTION DE PANNE DE SYSTÈME DE LUBRIFIANT D'ENSEMBLE D'ENGRENAGES

(43) Date of publication of application: 08.01.2020
(73) Proprietor: GE Avio S.r.l., 10040 Rivalta di Torino (TO) (IT)
(72) Inventor: Manzoni, Miriam, 10040 Rivalta DI Torino (TO) (IT); Bardone, Gianni, 10040 Rivalta DI Torino (TO) (IT); Bellocchio, Giuseppe, 10040 Rivalta DI Torino (TO) (IT)
(74) Representative: Lovino, Paolo

(56) References cited:
- EP-A1- 3 109 414
- WO-A2-2015/076903

## Description

### FIELD

The present subject matter relates generally to structures and methods for lubricant system failure detection for gear assemblies for turboshaft-powered vehicles.

### BACKGROUND

Turboshaft-powered vehicles, such as rotary-wing aircraft, may have accidents or incidents resulting from gear assembly failure (e.g., main gearboxes between an engine and a rotary wing or propeller). Possible failures can result from lubrication system failure at the gear assembly. Such failures may include materials failure, sensor failure, valve failure, etc. preventing lubricant from sufficiently flowing through the gear assembly.

Known solutions include pre-flight systems checks and designing system redundancies. Additionally, ground operations performed by using an auxiliary power unit (APU) may allow a test to be performed at the lubrication system to verify a flow of lubricant through the gear assembly before starting main engine and gear assembly operation. However, in the event of bypassing pre-flight systems checks, failures or issues at the lubricant system may be undetected prior to failure of the gear assembly, the vehicle, or both.

As such, there is a need for methods and structures for detecting lubricant system failure in gear assemblies, and mitigation of dormant failures of lubricant systems. In this regard, EP3109414 discloses a method of monitoring a position of a lubricant valve in a gas turbine engine by using a first auxiliary pressure reading and a second auxiliary pressure reading; and WO2015/076903 discloses a lubrication system including a first valve, that separates an auxiliary lubricant circuit from a primary lubricant circuit, and a sensor disposed within the auxiliary lubricant circuit for sensing pressure.

### BRIEF DESCRIPTION

Aspects and advantages of the invention will be set forth in part in the following description, or may be obvious from the description, or may be learned through practice of the invention.

A lubricant system for a gear assembly of an aircraft including an engine is provided, as defined in claim 1.

one embodiment, the first pressure sensor defines a pressure transducer measuring a pressure value upstream relative to the main lubricant conduit and the emergency lubricant conduit. The second pressure sensor defines a pressure transducer measuring a pressure value downstream of the valve.

In still various embodiments, the valve includes an elastic displacement device. In one embodiment, the valve defines a force F_{spring} corresponding to the valve defining the closed position, wherein F_{spring} is greater than a force Fₘₐᵢₙ corresponding to a pressure at the main lubricant conduit when the engine is at rest. In another embodiment, the lubricant system defines the pressure at the main lubricant conduit when the engine is in operation corresponding to a force Fₘₐᵢₙ greater than the force F_{spring}.

In still yet various embodiments, the valve is configured to generate a signal indicating the valve is in the open position. In one embodiment, the valve is configured to generate the signal as a visual indication of the open position. In another embodiment, the valve is configured to generate the signal as an electrical signal.

Another aspect of the present disclosure is directed to a method for operating a lubricant system for a gear assembly of an aircraft including one or more engines, as defined in claim 5.

In one embodiment, the method further includes discontinuing operation of the engine if the signal indicates the closed position at engine operation.

In one embodiment, the method further includes comparing a pressure value from the pressure sensor downstream of the valve and a pressure value upstream of the valve.

In another embodiment, the method further includes supplying a pressurized flow of lubricant to the lubricant system when the engine is in operation.

In still another embodiment, generating the signal includes generating a visual indication of the open position of the valve.

In various embodiments, generating the signal includes generating an electrical signal to a controller of the engine. In one embodiment, generating the electrical signal to the controller includes generating the signal indicating a lubricant system error when the valve defines the closed position at engine operation.

In one embodiment, the method further includes disposing the valve to the open position when a pressure of lubricant at the main lubricant conduit corresponds to a force Fₘₐᵢₙ at the valve greater than a force F_{spring} at the valve.

In another embodiment, the method further includes disposing the valve to the closed position when a pressure of lubricant at the main lubricant conduit corresponds to a force Fₘₐᵢₙ at the valve less than a force F_{spring} at the valve.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIGS. 1A-1B are perspective views of an exemplary aircraft in accordance with an aspect of the present disclosure;
FIG. 2 is an exemplary schematic cross-sectional view of a gas turbine engine in accordance with an aspect of the present disclosure;
FIG. 3 illustrates an exemplary schematic view of a system for controlling operation of an aircraft in accordance with an aspect of the present disclosure;
FIG. 4 illustrates an exemplary schematic view of a lubricant system for the aircraft in accordance with an aspect of the present disclosure; and
FIG. 5 illustrates an exemplary flow diagram of an embodiment of a method for operating a lubricant system in accordance with aspects of the present subject matter.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention as defined by the attached claims. For instance, features illustrated or described as part of one embodiment can be used with another embodiment to yield a still further embodiment. Thus, it is intended that the present invention covers such modifications and variations as come within the scope of the appended claims.

As used herein, the terms "first", "second", and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

Embodiments of methods and structures for detecting lubricant system failure in gear assemblies, and mitigation of dormant failures of lubricant systems are generally provided. The structures generally include a main lubricant conduit and an emergency lubricant conduit joined with a valve. The valve defines a closed position disposing lubricant through the emergency lubricant conduit when the engine is at rest. The valve defines an open position disposing lubricant through the main lubricant conduit when the engine is in operation. Pressure sensors upstream of the valve measure pressure at each of the main lubricant conduit and the emergency lubricant conduit, such as to verify operation of a pump providing the flow of lubricant through each conduit. A pressure sensor downstream of the valve measures a pressure value egressing the valve. During pre-flight checks, a signal from the valve indicates whether the valve is in the closed position when the engine is at rest, or whether there is a lubricant system error in which the valve is in the open position even if the engine is at rest. During operation of the engine prior to aircraft take-off, the downstream and upstream pressure values are compared to determine whether lubricant is flowing to the gear assembly via the main lubricant conduit rather than the emergency lubricant conduit.

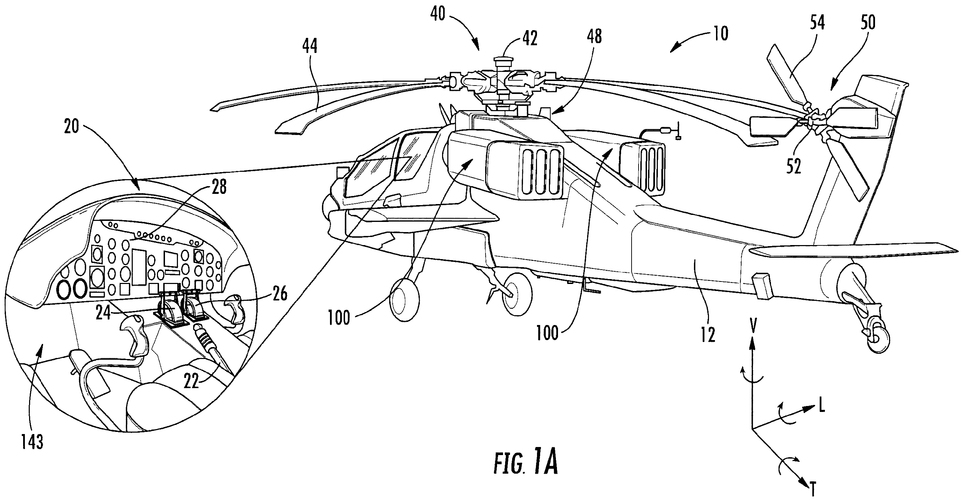

FIGS. 1A-1B provide perspective views of an exemplary aircraft 10 in accordance with the present disclosure. The aircraft 10 defines an orthogonal coordinate system, including three orthogonal coordinate axes. More specifically, the three orthogonal coordinate axes include a lateral axis L, a longitudinal axis T, and a vertical axis V. In operation, the aircraft 10 may move along or around at least one of the lateral axis L, the longitudinal axis T, and the vertical axis V.

In the embodiment illustrated in FIG. 1A, the aircraft 10 includes an airframe 12 and a cockpit 20. In one embodiment, the cockpit 20 may include a collective pitch input device 22, one or more throttle input devices 24, 26 and an instrument panel 28. The aircraft 10 further includes a main rotor assembly 40 and a tail rotor assembly 50. The main rotor assembly 40 includes a main rotor hub 42 and a plurality of main rotor blades 44. As shown, each main rotor blade 44 extends outwardly from the main rotor hub 42. The tail rotor section 50 includes a tail rotor hub 52 and a plurality of tail rotor blades 54. Each tail rotor blade 54 extends outwardly from the tail rotor hub 52.

Additionally, the aircraft 10 may include an engine 100 to generate and transmit power to drive rotation of the main rotor blades 44 and the tail rotor blades 54. In particular, rotation of the main rotor blades 44 generates lift for the aircraft 10, while rotation of the tail rotor blades 54 generates sideward thrust at the tail rotor section 50 and counteracts torque exerted on the airframe 12 by the main rotor blades 44.

Referring now to FIGS. 1A-1B, the aircraft 10 further includes a main transmission 48 disposed mechanically between the engine 100 and the main rotor assembly 40 and the tail rotor assembly 50. The main transmission 48 generally reduces an output speed of the engine 100 to a speed more suitable for operation of the main rotor assembly 40 and/or the tail rotor assembly 50. The main transmission 48 may further direct power from one or more of the engines 100 to one or more accessories of the aircraft 10. Still further, the main transmission 48 may generally change an axis of rotation between the engine 100 and the main rotor assembly 40. Although not shown in further detail, various embodiments of the main transmission 48 may include a clutch assembly to selectively engage or disengage the main rotor assembly 40 and/or tail rotor assembly 50 from the engine 100. Still further, the main transmission 40 includes a lubricant system providing lubricant to gears, bearings, dampers, etc. of the main transmission 48, such as further described below.

It should be appreciated that, although a particular aircraft has been illustrated and described in regard to the aircraft 10, other configurations and/or aircraft, such as high speed compound rotary-wing aircraft with supplemental translational thrust systems, dual contra-rotating, coaxial rotor system aircraft, turboprops, tilt-rotors, tilt-wing aircraft, conventional take-off and landing aircraft and other turbine driven machines will also benefit from the present disclosure.

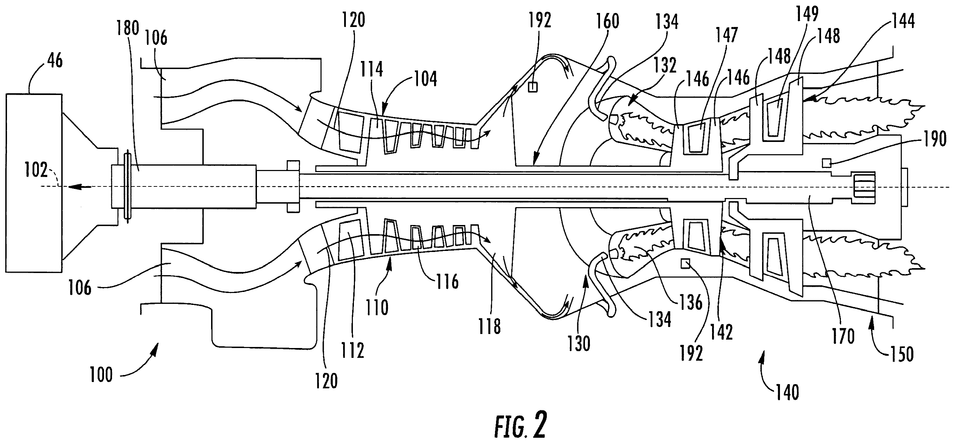

FIG. 2 provides a schematic cross-sectional view of an exemplary gas turbine engine 100 in accordance with the present disclosure. As shown in FIG. 2, the gas turbine engine 100 defines a longitudinal or centerline axis 102 extending through for reference. The gas turbine engine 100 may generally include a substantially tubular outer casing 104 that defines an annular inlet 106. The outer casing 104 may be formed from a single casing or multiple casings. The outer casing 104 encloses, in serial flow relationship, a gas generator compressor 110, a combustion section 130, a turbine 140, and an exhaust section 150. The gas generator compressor 110 includes an annular array of inlet guide vanes 112, one or more sequential stages of compressor blades 114, one or more sequential stages of one or more stages of variable vanes 116, one or more sequential stages of one or more stationary compressor vanes, and a centrifugal compressor 118. Collectively, the compressor blades 114, variable vanes 116, stationary compressor vanes, and the centrifugal compressor 118 define a compressed air path 120.

The combustion section 130 includes a combustion chamber 132 and one or more fuel nozzles 134 extending into the combustion chamber 132. The fuel nozzles 134 supply fuel to mix with compressed air entering the combustion chamber 132. Further, the mixture of fuel and compressed air combust within the combustion chamber 132 to form combustion gases 136. As will be described below in more detail, the combustion gases 136 drive both the compressor 110 and the turbine 140.

The turbine 140 includes a gas generator turbine 142 and a power turbine 144. The gas generator turbine 142 includes one or more sequential stages of turbine rotor blades 146 and one or more sequential stages of stator vanes 147. Likewise, the power turbine 144 includes one or more sequential stages of turbine rotor blades 148 and one or more sequential stages of stator vanes 149. As will be discussed below in more detail, the gas generator turbine 142 drives the gas generator compressor 110 via a gas generator shaft 160, and the power turbine 144 drives an output shaft 180 via a power turbine shaft 170.

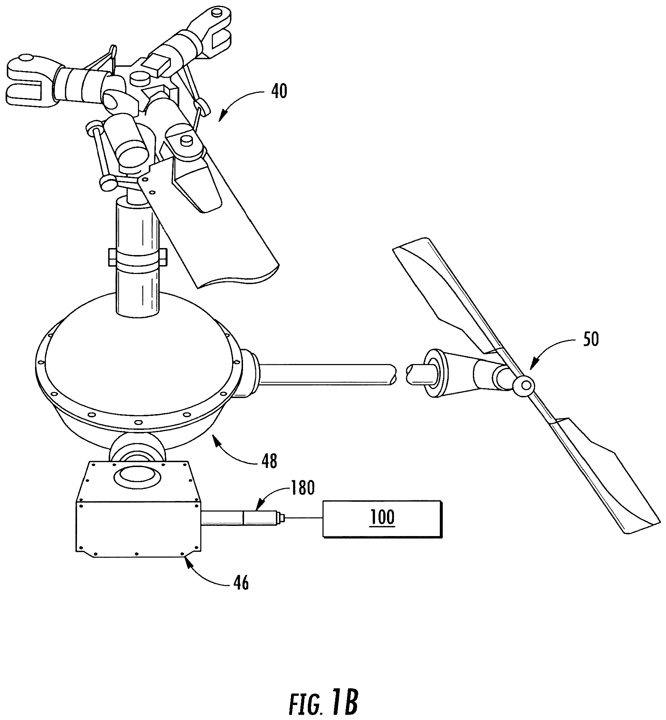

As shown in the embodiment illustrated in FIG. 2, the gas generator compressor 110 and the gas generator turbine 142 are coupled to one another via the gas generator shaft 160. In operation, the combustion gases 136 drive both the gas generator turbine 142 and the power turbine 144. As the gas generator turbine 142 rotates around the centerline axis 102, the gas generator compressor 110 and the gas generator shaft 160 both rotate around the centerline axis 102. Further, as the power turbine 144 rotates, the power turbine shaft 170 rotates and transfers rotational energy to the output shaft 180. As an example, the output shaft 180 of the engine 100 may rotate both the main and tail rotor blades 44, 54 of the aircraft 10 (FIG. 1).

It should be appreciated that, although the aircraft 10 is depicted as including one or more gas turbine engines 100, the aircraft 10 may generally receive power from other engine types, including, but not limited to, piston engines, hybrids, or other engines suitable for transmitting power to one or more of the main rotor assembly 40, the tail rotor section 50, a gear assembly 46, the main transmission 48, or other systems of the aircraft 10.

It should further be appreciated that the gear assembly 46 transmits power from the engine 100 to one or more of the main rotor assembly 40, the tail rotor section 50, or both. In various embodiments, the gear assembly 46 may define a portion of the main transmission 48 or one or more other transmissions at the aircraft 10. For example, the gear assembly 46 may change or reduce an output speed from the engine 10 to one or more of the main rotor assembly 40, the tail rotor section 50, or both.

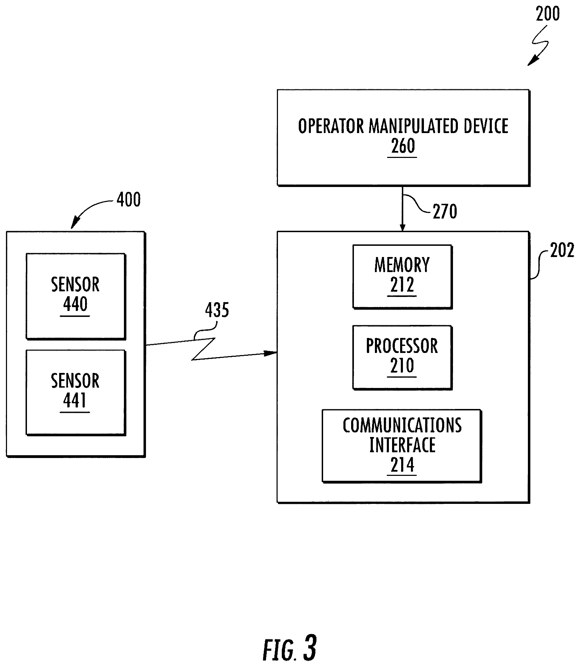

Referring now to FIG. 3, an exemplary embodiment of a system 200 for controlling operation of the aircraft 10 (FIG. 1) is generally provided. More specifically, an exemplary embodiment of the system 200 for controlling a lubricant system 400 of the gear assembly 46 is provided. As shown in FIG. 3, in one embodiment, the system 200 includes one or more controllers 202. The controller 202 may generally include one or more processor(s) 210 and associated memory 212 configured to perform a variety of computer-implemented functions (e.g., performing the methods, steps, calculations and the like disclosed herein). It should be appreciated, however, that the controller 202 may be a programmable logic device, such as a Field Programmable Gate Array (FPGA).

As used herein, the term "processor" refers not only to integrated circuits referred to in the art as being included in a computer, but also refers to a controller, microcontroller, a microcomputer, a programmable logic controller (PLC), an application specific integrated circuit (ASIC), a Field Programmable Gate Array (FPGA), and other programmable circuits. Additionally, the memory 212 may generally include memory element(s) including, but not limited to, computer readable medium (e.g., random access memory (RAM)), computer readable non-volatile medium (e.g., flash memory), a compact disc-read only memory (CD-ROM), a magneto-optical disk (MOD), a digital versatile disc (DVD) and/or other suitable memory elements or combinations thereof.

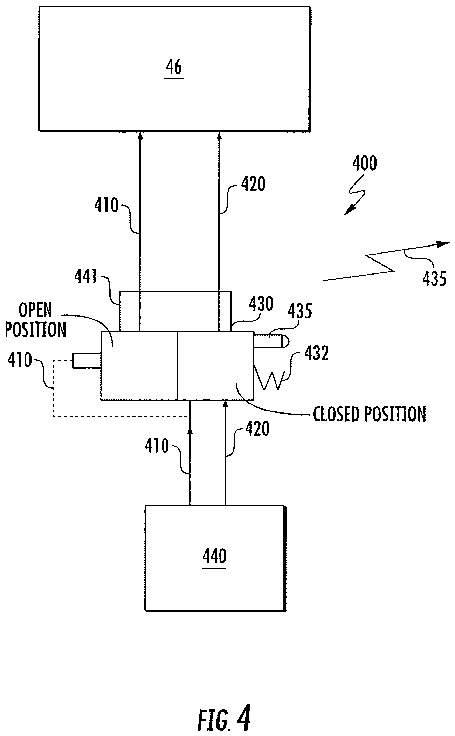

The controller 202 may also include a communications interface module 214. The communications interface module 214 includes associated electronic circuitry that is used to send and receive data. More specifically, the communications interface module 214 of the controller 202 is used to send and receive data to and from the lubricant system 400. More specifically, the communications interface module 214 of the controller 202 is used to send and receive data 435 to and from one or more sensors 440, 441 of the lubricant system 400, such as further described in regard to FIG. 4. It should be appreciated that the communications interface module 214 may be any combination of suitable wired or wireless communications interfaces.

In various embodiments, the controller 202 may further be in communication with one or more sensors elsewhere at the aircraft 10, such as, but not limited to, sensors at the engine 100. Examples of the one or more sensor(s) elsewhere at the aircraft 10 may include, without limitation, a pressure sensor, a temperature sensor, a torque sensor, and a speed sensor. For example, the one or more sensors at the aircraft 10 may include, but is not limited to, sensors configured to sense an ambient pressure (P0) or an inlet pressure (PI) at the gas generator compressor 110; a temperature sensor configured to sense an inlet temperature (T1) at the gas generator compressor 110; a pressure sensor configured to sense a discharge pressure (P_{S3}) at the outlet of the gas generator compressor 110; a temperature sensor configured to sense a turbine gas temperature (T_{4.5}) within the turbine section 140; a torque sensor configured to detect an engine torque (Q1) of the engine 100; a speed sensor configured to detect a rotational speed N_{G} of the gas generator shaft 160; or a speed sensor configured to detect a rotational speed Np of the power turbine shaft 170, or combinations thereof. In still various embodiments, the sensor 440, 441 at the lubricant system 400 may define a pressure sensor of a gear assembly 46 of the aircraft 10 (FIG. 1), such as further described below.

The controller 202 may be configured to receive one or more operator commands from an operator manipulated input device 260 of the aircraft 10. In particular, the controller 202 may be communicatively coupled to the operator manipulated input device 260 via data buses 270. Thus, the controller 202 may receive the one or more operator commands via data buses 270. It should be appreciated that the data buses 270 may be any suitable wired communications interface. For example, the data buses 270 may be based on ARINC 429, MIL-STD 1553, IEEE 1394, or any other suitable standard. It should also be appreciated, however, that the data buses 270 may, in other embodiments, be any suitable wireless communications interface.

In one embodiment, the operator manipulated input device 260 may be located in the cockpit 20 of the aircraft 10 (FIG. 1). For example, the operator manipulated input device 260 may include at least one of the collective input device 22 and the throttle input devices 24, 26 (FIG. 1). As will be discussed below in more detail, the controller 202 may be configured to control the operation of the aircraft 10 based, at least in part, on the one or more operator command(s) received over the data buses 270.

As an example, an operator of the aircraft 10 may generate an operator command through the collective input device 22. The operator manipulated input device 260 may be used to increase or decrease lift of the aircraft 10, increase output power or torque at the engine 100, or otherwise actuate or control the aircraft 10. Additionally, or alternatively, the operator manipulated input device 260 may be used to send or receive commands from the lubricant system 400, such as commands or signals indicating an open position or a closed position of a valve 430 at the lubricant system 400 such as described in regard to FIGS. 4-5.

Referring now to FIG. 4, a schematic lubricant system 400 for the gear assembly 46 is generally provided. The lubricant system 400 includes a main lubricant conduit 410 and an emergency lubricant conduit 420 joined at a valve 430. The valve 430 defines a closed position disposing lubricant through the emergency lubricant conduit 420 when the gas turbine engine 100 is at rest (i.e., not rotating). The valve 430 defines an open position disposing lubricant through the main lubricant conduit 410 when the gas turbine engine 100 is in operation (i.e., rotating via generation of combustion gases 136 such as shown and described in regard to FIG. 2).

In various embodiments, the lubricant system 400 includes a first pressure sensor(s) 440 disposed along each of the main lubricant conduit 410 and the emergency lubricant conduit 420 upstream of the valve 430. The first pressure sensor 440 may define a pressure transducer measuring a first pressure value at the main lubricant conduit 410 and a second pressure value at the emergency lubricant conduit 420. In various embodiments, the first pressure sensor 440 is disposed along the main lubricant conduit 410 and the emergency lubricant conduit 420 upstream of the valve 430.

The first pressure sensor(s) 440 may generally measure pressure at each of the main lubricant conduit 410 and the emergency lubricant conduit 420 such as to detect correct operation of a pump at each respective conduit 410, 420. The lubricant system 400 further includes a second pressure sensor 441 downstream of the valve 430. The second pressure sensor 441 measures a third pressure value of lubricant egressing the valve 430 to the gear assembly 46. As a pressure of lubricant from the main lubricant circuit 410 (e.g., first pressure value) is greater than a pressure of lubricant from the emergency lubricant circuit 420 (e.g., second pressure value), a difference between the pressures (e.g., difference between the first pressure value and the second pressure value, such as acquired via the second pressure sensor 441) generally indicates to the controller 202 and/or user or operator of the aircraft 10 whether the main lubricant circuit 410 is providing lubricant to the gear assembly 46 rather than the emergency lubricant circuit 420.

In still various embodiments, the valve 430 may include a spring 432 or other elastic displacement device such as to dispose or articulate the valve 430 from a closed position when the gas turbine engine 100 is at rest to an open position when the gas turbine engine 100 is in operation. In one embodiment, the valve 430 defines a force F_{spring} at the spring 432 corresponding to the valve 430 defining the closed position when the gas turbine engine 100 is at rest. The first pressure value at the main lubricant conduit 410 corresponds to a force Fₘₐᵢₙ produced by the first pressure value at the valve 430. For example, the first pressure value at the valve 430 may be defined opposing the force F_{spring}. As such, when the gas turbine engine 100 is at rest, the first pressure value at the main lubricant conduit 410 defines the force Fₘₐᵢₙ less than the force F_{spring} (i.e., force F_{spring} is greater than force Fₘₐᵢₙ) such that the force F_{spring} at the spring 432 keeps the valve 430 in the closed position. As stated above, when the valve 430 is in the closed position the flow of lubricant is disposed through the emergency lubricant conduit 420. Additionally, or alternatively, when the valve 430 is in the closed position, the flow of lubricant is disabled from flow through the main lubricant conduit 410.

Additionally, when the gas turbine engine 100 is in operation (i.e., producing combustion gases 136 such as described in regard to FIG. 2), the first pressure value at the main lubricant conduit 410 defines the force Fₘₐᵢₙ greater than the force F_{spring} (i.e., force F_{spring} is less than force Fₘₐᵢₙ) such that the force F_{spring} keeps the valve 430 in the open position. As stated above, when the valve 430 is in the open position the flow of lubricant is disposed through the main lubricant conduit 410. Additionally, or alternatively, when the valve 430 is in the open position, the flow of lubricant is disabled from flow through the emergency lubricant conduit 420.

Embodiments of the lubricant system 400 generally described in regard to FIG.4 enable detecting lubricant system failure in the gear assembly 46 of embodiments of the aircraft 10 such as shown and described in regard to FIGS. 1-3. Additionally, or alternatively, embodiments of the lubricant system 400 provide mitigation of undetected failures of lubricant systems due to dormant failure at the valve 430 in the gear assembly 46. For example, if the valve 430 fails (e.g., inoperable, non-moving, or otherwise stuck in the closed position when the gas turbine engine 100 is in operation), the second pressure sensor 441 downstream of the valve 430 measures or otherwise detects an undesirably low pressure value, such as corresponding to the second pressure value of the emergency lubricant conduit 420.

Referring still to FIG. 4, in various embodiments, the valve 430 generates a signal 435 indicating the valve 430 is blocked or otherwise inoperable in the open position. The signal 435 thereby detects and indicates dormant failure at the valve 430, such as when the engine (e.g., engine 100 in FIGS. 1-2) is at rest or otherwise not providing lubricant to the lubricant system 400. For example, the detection may generally occur during pre-flight checks of the aircraft 10 and/or engine 100. In one embodiment, the valve 430 generates the signal 435 as a visual indication of the open position. For example, the visual indication may include a light, marker, toggle, sign, flag, or other mechanical or physical display at the valve 430.

In another embodiment, the valve 430 generates the signal 435 as an electrical signal. For example, the signal 435 defining the electrical signal may be transmitted to generate an indication at the cockpit 20 (e.g., at the instrument panel 28) of the aircraft 10 (FIG. 1.). The signal 435 at the cockpit 20 may define a lubricant system error signal when the valve 430 defines the open position during non-operation of the gas turbine engine 100 (i.e., the engine is at rest). The signal 435 may define the lubricant system error signal when the valve 430 defines the closed position and the second pressure sensor 441 downstream of the valve 430 measures or otherwise detects a pressure value substantially corresponding to the second pressure value from the emergency lubricant conduit 420 when the gas turbine engine 100 is in operation.

In still another embodiment, the valve 430 generates the signal 435 as an electrical signal transmitted in communication (e.g., communicatively coupled with the communications interface 214 in FIG. 3) with one or more controllers 202 (FIG. 3) associated with the gear assembly 46 (FIGS. 1-2) and the lubricant system 400 (FIG. 4). The signal 435 at the controller 202 may define a lubricant system error signal when the valve 430 defines the closed position during operation of the engine 100 (e.g., FIGS. 1-2). In various embodiments, the controller 202 may adjust or modulate a control or operation of the engine 100 in response to the signal 435 indicating lubricant system error. Additionally, or alternatively, the signal 435 to the controller 202 may be coupled with one or more signals from the sensors 440, 441 (FIG. 3) indicating speed, thrust, power output, etc. of the output shaft 180 of the gas turbine engine 100 (FIG. 2). As such, the signal 435 from the valve 430 and one or more signals from the sensors 440, 441 (FIG. 3) may be transmitted to the cockpit 20 of the aircraft 10 (FIG. 1) to indicate that the valve 430 is in the closed position during operation of the gas turbine engine 100 (e.g., FIGS. 1 and 3).

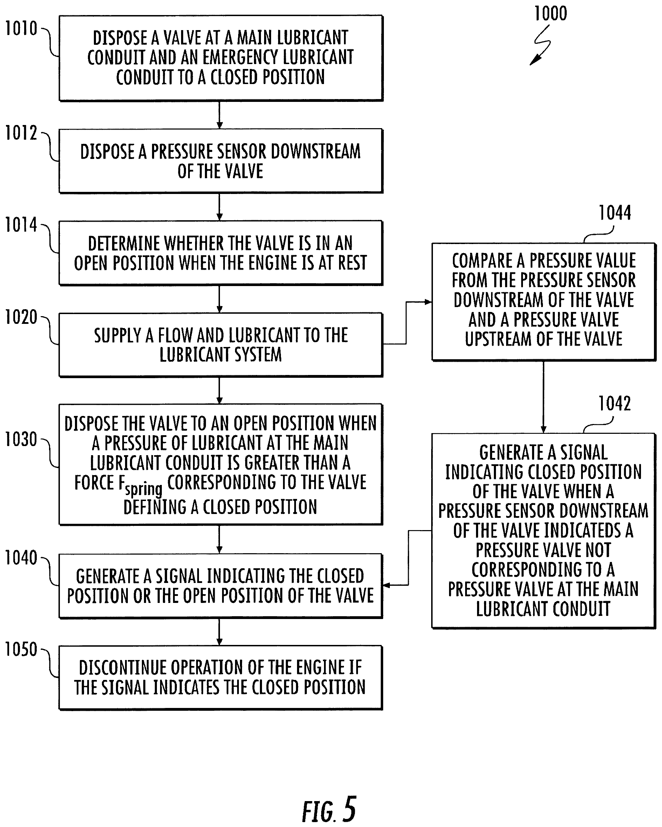

Referring now to FIG. 5, an exemplary flow diagram outlining steps of a method for operating a lubricant system for a gear assembly of an aircraft is generally provided (hereinafter, "method 1000"). The method 1000 for operating the lubricant system (e.g., lubricant system 400) may detect failure at the lubricant system and/or mitigate undetected failures at the lubricant system. The method 1000 generally outlined and described in regard to FIG. 5 may be implemented or utilized in conjunction with embodiments of the aircraft 10, the gas turbine engine 100, and/or the lubricant system 400, such as shown and described in regard to FIGS. 1-4. However, it should be appreciated that the method 1000 may further be utilized or implemented in regard to other aircraft, gas turbine engines, gear assemblies, or lubricant systems not shown herein.

The method 1000 includes at 1010 disposing a valve at the lubricant system at a main lubricant conduit and an emergency lubricant conduit in which an at rest position enables flow of lubricant to the emergency lubricant conduit and disables flow of lubricant to the main lubricant conduit. The method 1000 further includes at 1012 disposing a pressure sensor downstream of the valve at a connection between the main lubricant conduit and the emergency lubricant conduit. The method 1000 further includes at 1014 determining whether the valve is in an open position when an engine of the aircraft is at rest. For example, determining whether the valve is in an open position may generally occur during pre-flight checks of the aircraft and/or engines.

The method 1000 further includes at 1020 supplying a pressurized flow of lubricant to the lubricant system; and at 1030 disposing the valve to an open position when a pressure of lubricant at the main lubricant conduit is greater than a force F_{spring} corresponding to the valve defining a closed position when the engine is at rest.

In various embodiments at 1030, such as described in regard to FIG. 4, disposing the valve to the open position is further defined when a pressure of lubricant at the main lubricant conduit (e.g., first pressure value at the main lubricant conduit 410 in FIG. 4) corresponds to a force Fₘₐᵢₙ at the valve (e.g., valve 430 in FIG. 4) greater than a force F_{spring} at the valve corresponding to the closed position of the valve when the gas turbine engine is at rest (i.e., zero rotation or power output from the output shaft 180 in FIG. 2). In one embodiment, disposing the valve to the open position defines the force Fₘₐᵢₙ greater than the force F_{spring} when the engine is in operation (e.g., in rotation or generating power output at the output shaft 180 in FIG. 2).

In still various embodiments at 1010, such as described in regard to FIG. 4, disposing the valve to the closed position is further defined when a pressure of lubricant at the main lubricant conduit (e.g., first pressure value at the main lubricant conduit 410 in FIG. 4) corresponds to a force Fₘₐᵢₙ at the valve (e.g., valve 430 in FIG. 4) less than the force F_{spring} at the valve. For example, disposing the valve to the closed position defines the force Fₘₐᵢₙ less than the force F_{spring} when the engine is at rest.

In various embodiments, the method 1000 further includes at 1040 generating a signal (e.g., signal 435 in FIG. 4) indicating the open position of the valve (e.g., valve 430 in FIG. 4). Valve 430 may produce a visual indicator during pre-flight checks to verify the open position of the valve 430 when the engine is at rest (e.g., at step 1014). The method 1000 may further include at 1042 generating a signal indicating the closed position of the valve when a pressure sensor downstream of the valve indicates a pressure value not corresponding to a pressure value at the main lubricant conduit. At 1044, the method 1000 further includes comparing the downstream and upstream pressure values during operation of the engine prior to aircraft take-off to determine whether lubricant is flowing via the main lubricant conduit rather than the emergency lubricant conduit.

In still various embodiments, generating the signal (e.g., signal 435) includes generating an electrical signal to a controller (e.g., controller 202 in FIG. 3) of the engine (e.g., gas turbine engine 100 in FIG. 1). For example, generating the signal may further include transmitting the signal to the controller such as to adjust or modulate operation of the engine, such as described in regard to FIG. 4. As another example, generating the signal may further include transmitting the signal to the cockpit 20 in combination with a speed, thrust, or power output signal from the sensors 440, 441 of the engine 100 (FIGS. 1-2), such as corresponding to the output shaft 180 (FIG. 2).

Referring still to the method 1000 at 1040 generating the signal to the controller may further include generating a lubricant system error signal when the valve defines the closed position and the engine (e.g., engine 100 in FIGS. 1-2) is in operation. In various embodiments, operation of the engine 100 may be based, at least in part, on a speed, output thrust, or power output of the engine 100 or output shaft 180 (FIG. 2). In another embodiment, the method 1000 further includes at 1050 discontinuing operation of the engine if the signal indicates the closed position at engine operation. For example, following transmission of the signal 435 to the cockpit 20 of the aircraft 10, the aircraft 10 and/or the engine 100 may be manually discontinued from further operation via a pilot or other aircraft operator. As another example, such as described in regard to FIG. 4, the signal 435 indicating lubricant system error may further adjust or modulate control of the aircraft 10 and/or the engines 100 such as to automatically inhibit or discontinue further operation of the aircraft 10 until the lubricant system error is resolved (e.g., the valve 430 defines the closed position when the engine 100 is at rest, or the valve 430 defines the open position when the engine 100 is in operation). As still another example, if prior to aircraft take-off the third pressure value from the second pressure sensor 441 does not correspond to a first pressure value at the main lubricant conduit 410 then aircraft take-off is to be aborted.

This written description uses examples to disclose the invention, including the best mode, and also to enable any person skilled in the art to practice the invention, including making and using any devices or systems and performing any methods as long as they fall within the scope of the appended claims. The patentable scope of the invention is defined by the claims, and may include other examples that occur to those skilled in the art. Such other examples are limited by the scope of the appended claims.

## Claims

1. A lubricant system (400) for a gear assembly (46) of an aircraft (10) including one or more engines (100), the lubricant system (400) comprising:
a main lubricant conduit (410) and an emergency lubricant conduit (420) joined with a valve (430), and further wherein the valve (430) defines a closed position disposing lubricant through the emergency lubricant conduit (420) when the engine (100) is, in use, at rest, and wherein the valve (430) defines an open position disposing lubricant through the main lubricant conduit (410) when the engine (100) is, in use, in operation;
the lubricant system (400) further comprising:
a first pressure sensor (440) disposed along the main lubricant conduit (410) and the emergency lubricant conduit (420) upstream of the valve (430); and
a second pressure sensor (441) disposed at the main lubricant conduit (410) and the emergency lubricant conduit (420);
wherein said second pressure sensor is disposed downstream of the valve (430).

2. The lubricant system (400) of claim 1, wherein the first pressure sensor (440) defines a pressure transducer measuring a pressure value upstream relative to the main lubricant conduit (410) and the emergency lubricant conduit (420), and wherein the second pressure sensor (441) defines a pressure transducer measuring a pressure value downstream of the valve (430).

3. The lubricant system (400) of any of claims 1-2, wherein the valve (430) defines a force F_{spring} corresponding to the valve (430) defining the closed position, wherein F_{spring} is greater than a force Fₘₐᵢₙ corresponding to a pressure at the main lubricant conduit (410) when the engine (100) is at rest.

4. The lubricant system (400) of any of claims 1-3, wherein the lubricant system (400) defines the pressure at the main lubricant conduit (410) when the engine (100) is in operation corresponding to a force Fₘₐᵢₙ greater than the force F_{spring}.

5. A method (1000) for operating a lubricant system according to any of claims 1-4 for a gear assembly
of an aircraft, wherein the aircraft comprises one or more engines, the method comprising:
supplying (1020) a pressurized flow of lubricant to the lubricant system;
determining (1014) whether a valve disposed at a main lubricant conduit and an emergency lubricant conduit indicates an open position when the engine is at rest, wherein the open position indicates a failure of the valve enabling flow of lubricant from the emergency lubricant conduit to the gear assembly; and
generating (1040) a signal indicating the open position of the valve when the engine is at rest;
wherein the method (1000) further comprises:
generating (1042) a signal indicating a closed position of the valve when a pressure sensor downstream of the valve indicates a pressure value not corresponding to a pressure value at the main lubricant conduit.

6. The method (1000) of claim 5, further comprising:
discontinuing (1050) operation of the engine if the signal indicates the closed position at engine operation.

7. The method (1000) of any of claims 5-6, further comprising:
comparing (1044) a pressure value from the pressure sensor downstream of the valve and a pressure value upstream of the valve.

8. The method (1000) of any of claims 5-7, further comprising: supplying (1020) the pressurized flow of lubricant to the lubricant system when the engine is in operation.

9. The method (1000) of any of claims 5-8, wherein generating the signal includes generating a visual indication of the open position of the valve.

10. The method (1000) of any of claims 5-9, wherein generating the signal comprises generating an electrical signal to a controller indicating a lubricant system error when the valve defines the closed position at engine operation

11. The method (1000) of any of claims 5-10, further comprising:
disposing (1030) the valve to the open position when a pressure of lubricant at the main lubricant conduit corresponds to a force Fₘₐᵢₙ at the valve greater than a force F_{spring} at the valve.

12. The method (1000) of claim any of claims 5-11, further comprising:
disposing (1010) the valve to the closed position when a pressure of lubricant at the main lubricant conduit corresponds to a force Fₘₐᵢₙ at the valve less than a force F_{spring} at the valve.

## Patentansprüche

1. Ein Schmiermittelsystem (400) für eine Getriebeanordnung (46) eines Flugzeugs (10), welches ein oder mehrere Antriebe (100) umfasst, wobei das Schmiermittelsystem (400) umfasst:
eine Hauptschmiermittelleitung (410) und eine Notschmiermittelleitung (420), welche über ein Ventil (430) verbunden sind, und ferner, wobei das Ventil (430) eine geschlossene Position definiert, welche Schmiermittel durch die Notschmiermittelleitung (420) bewegt, wenn der Antrieb (100) in Verwendung, im Ruhezustand, ist und wobei das Ventil (430) eine offene Position definiert, welche Schmiermittel durch die Hauptschmiermittelleitung (410) bewegt, wenn der Antrieb (100) in Verwendung, im Betrieb ist; wobei
das Schmiermittelsystem (400) ferner umfasst:
einen ersten Drucksensor (440), welcher entlang der Hauptschmiermittelleitung (410) und der Notschmiermittelleitung (420) stromaufwärts des Ventils (430) angeordnet ist; und
einen zweiten Drucksensor (441), welcher an der Hauptschmiermittelleitung (410) und der Notschmiermittelleitung (420) angeordnet ist, wobei
der besagte zweite Drucksensor (441) stromabwärts des Ventils (430) angeordnet ist.

2. Das Schmiermittelsystem (400) nach Anspruch 1, wobei der erste Drucksensor (440) einen Druckwandler definiert, der einen Druckwert stromaufwärts relativ zu der Hauptschmiermittelleitung (410) und der Notschmiermittelleitung (420) misst, und wobei der zweite Drucksensor (441) einen Druckwandler definiert, der einen Druckwert stromabwärts des Ventils (430) misst.

3. Das Schmiermittelsystem (400) nach einem der Ansprüche 1 bis 2, wobei das Ventil (430) eine Kraft F_{spring} definiert, welche dem die geschlossene Position definierenden Ventil (430) entspricht, wobei F_{spring} größer als eine Kraft Fₘₐᵢₙ, welche einem Druck an der Hauptschmiermittelleitung (410) entspricht, wenn der Antrieb (100) in dem Ruhezustand ist.

4. Das Schmiermittelsystem (400) nach einem der Ansprüche 1 bis 3, wobei das Schmiermittelsystem (400) den Druck an der Hauptschmiermittelleitung (410) definiert, wenn der Antrieb (100) im Betrieb ist, welcher einer Kraft Fₘₐᵢₙ größer als der Kraft F_{spring} entspricht.

5. Ein Verfahren (1000) zum Betreiben eines Schmiermittelsystems nach einem der vorhergehenden Ansprüche für eine Getriebeanordnung eines Flugzeugs, wobei das Flugzeug ein oder mehrere Antriebe umfasst, wobei das Verfahren umfasst:
Bereitstellen (1020) eines druckbeaufschlagten Flusses eines Schmiermittels zu dem Schmiermittelsystem;
Bestimmen (1014), ob ein Ventil, welches an einer Hauptschmiermittelleitung und einer Notschmiermittelleitung angeordnet ist, eine offene Position angibt, wenn der Antrieb in einem Ruhezustand ist, wobei die offene Position einen Fehler des Ventils angibt, welcher einen Fluss des Schmiermittels von der Notschmiermittelleitung zu der Getriebeanordnung ermöglicht; und
Erzeugen (1040) eines Signals, welches die offene Position des Ventils angibt, wenn der Antrieb in dem Ruhezustand ist;
wobei das Verfahren ferner umfasst:
Erzeugen (1042) eines Signals, welches eine geschlossene Position des Ventils angibt, wenn ein Druck stromabwärts des Ventils einen Druckwert angibt, welcher keinem Druckwert entspricht, welcher an der Hauptschmiermittelleitung anliegt.

6. Das Verfahren (1000) nach Anspruch 5, ferner umfassend:
Unterbrechen (1050) des Betriebs des Antriebs, wenn das Signal die geschlossene Position bei Betrieb des Antriebs angibt.

7. Das Verfahren (1000) nach einem der Ansprüche 5 bis 6, ferner umfassend:
Vergleichen (1044) eines Druckwerts von dem Drucksensor stromabwärts des Ventils und eines Druckwerts stromaufwärts des Ventils.

8. Das Verfahren (1000) nach einem der Ansprüche 5 bis 7, ferner umfassend:
Bereitstellen (1020) des druckbeaufschlagten Flusses des Schmiermittels zu dem Schmiermittelsystem, wenn der Antrieb in Betrieb ist.

9. Das Verfahren (1000) nach einem der Ansprüche 5 bis 8, wobei das Erzeugen des Signals ein Erzeugen einer visuellen Angabe der offenen Position des Ventils beinhaltet.

10. Das Verfahren (1000) nach einem der Ansprüche 5 bis 9, wobei das Erzeugen des Signals ein Erzeugen eines elektrischen Signals an eine Steuerung, welches einen Schmiermittelsystemfehler angibt, wenn das Ventil die geschlossene Position im Betrieb des Antriebs definiert, beinhaltet.

11. Das Verfahren (1000) nach einem der Ansprüche 5 bis 10, ferner umfassend:
Anordnen (1030) des Ventils in der offenen Position, wenn der Druck des Schmiermittels an der Hauptschmiermittelleitung einer Kraft Fₘₐᵢₙ an dem Ventil größer als einer Kraft F_{spring} an dem Ventil entspricht.

12. Das Verfahren (1000) nach einem der Ansprüche 5 bis 11, ferner umfassend:
Anordnen (1010) des Ventils in der geschlossenen Position, wenn ein Druck des Schmiermittels an der Hauptschmiermittelleitung einer Kraft Fₘₐᵢₙ an dem Ventil geringer als einer Kraft F_{spring} an dem Ventil entspricht.

## Revendications

1. Système de lubrifiant (400) pour un ensemble d'engrenages (46) d'un aéronef (10) comportant un ou plusieurs moteurs (100), le système de lubrifiant (400) comprenant :
une conduite de lubrifiant principale (410) et une conduite de lubrifiant de secours (420) reliées avec une vanne (430), et en outre dans lequel la vanne (430) définit une position fermée qui introduit du lubrifiant dans la conduite de lubrifiant de secours (420) quand le moteur (100) est, en utilisation, au repos, et dans lequel la vanne (430) définit une position ouverte qui introduit du lubrifiant dans la conduite de lubrifiant principale (410) quand le moteur (100) est, en utilisation, en fonctionnement ;
le système de lubrifiant (400) comprenant en outre :
un premier capteur de pression (440) placé le long de la conduite de lubrifiant principale (410) et de la conduite de lubrifiant de secours (420) en amont de la vanne (430) ; et
un deuxième capteur de pression (441) placé au niveau de la conduite de lubrifiant principale (410) et de la conduite de lubrifiant de secours (420) ;
dans lequel ledit deuxième capteur de pression est placé en aval de la vanne (430).

2. Système de lubrifiant (400) selon la revendication 1, dans lequel le premier capteur de pression (440) définit un transducteur de pression qui mesure une valeur de pression en amont par rapport à la conduite de lubrifiant principale (410) et à la conduite de lubrifiant de secours (420), et dans lequel le deuxième capteur de pression (441) définit un transducteur de pression qui mesure une valeur de pression en aval de la vanne (430).

3. Système de lubrifiant (400) selon l'une quelconque des revendications 1 à 2, dans lequel la vanne (430) définit une force F_{spring} correspondant à la vanne (430) définissant la position fermée, dans lequel F_{spring} est supérieure à une force Fₘₐᵢₙ correspondant à une pression au niveau de la conduite de lubrifiant principale (410) quand le moteur (100) est au repos.

4. Système de lubrifiant (400) selon l'une quelconque des revendications 1 à 3, dans lequel le système de lubrifiant (400) définit la pression au niveau de la conduite de lubrifiant principale (410) quand le moteur (100) est en fonctionnement correspondant à une force Fₘₐᵢₙ supérieure à la force F_{spring}.

5. Procédé (1000) de mise en œuvre d'un système de lubrifiant selon l'une quelconque des revendications 1 à 4 pour un ensemble d'engrenages d'un aéronef, l'aéronef comprenant un ou plusieurs moteurs, le procédé comprenant les étapes suivantes :
fournir (1020) un écoulement de lubrifiant sous pression au système de lubrifiant ;
déterminer (1014) si une vanne placée au niveau d'une conduite de lubrifiant principale et d'une conduite de lubrifiant de secours indique une position ouverte quand le moteur est au repos, la position ouverte indiquant un défaut de la vanne permettant l'écoulement de lubrifiant de la conduite de lubrifiant de secours vers l'ensemble d'engrenages ; et
générer (1040) un signal indiquant la position ouverte de la vanne quand le moteur est au repos ;
dans lequel le procédé (1000) comprend en outre l'étape suivante :
générer (1042) un signal indiquant une position fermée de la vanne quand un capteur de pression en aval de la vanne indique une valeur de pression ne correspondant pas à une valeur de pression au niveau de la conduite de lubrifiant principale.

6. Procédé (1000) selon la revendication 5, comprenant en outre l'étape suivante :
arrêter (1050) le fonctionnement du moteur si le signal indique la position fermée pendant le fonctionnement du moteur.

7. Procédé (1000) selon l'une quelconque des revendications 5 à 6, comprenant en outre l'étape suivante :
comparer (1044) une valeur de pression provenant du capteur de pression en aval de la vanne et une valeur de pression en amont de la vanne.

8. Procédé (1000) selon l'une quelconque des revendications 5 à 7, comprenant en outre l'étape suivante :
fournir (1020) l'écoulement de lubrifiant sous pression au système de lubrifiant quand le moteur est en fonctionnement.

9. Procédé (1000) selon l'une quelconque des revendications 5 à 8, dans lequel la génération du signal comprend la génération d'une indication visuelle de la position ouverte de la vanne.

10. Procédé (1000) selon l'une quelconque des revendications 5 à 9, dans lequel la génération du signal comprend la génération d'un signal électrique à destination d'un contrôleur indiquant une erreur de système de lubrifiant quand la vanne définit la position fermée pendant le fonctionnement du moteur.

11. Procédé (1000) selon l'une quelconque des revendications 5 à 10, comprenant en outre l'étape suivante :
mettre (1030) la vanne dans la position ouverte quand une pression de lubrifiant dans la conduite de lubrifiant principale correspond à une force Fₘₐᵢₙ au niveau de la vanne supérieure à une force F_{spring} au niveau de la vanne.

12. Procédé (1000) selon l'une quelconque des revendications 5 à 11, comprenant en outre l'étape suivante :
mettre (1010) la vanne dans la position fermée quand une pression de lubrifiant dans la conduite de lubrifiant principale correspond à une force Fₘₐᵢₙ au niveau de la vanne inférieure à une force F_{spring} au niveau de la vanne.
